(19) Europäisches Patentamt
European Patent Office
Office européen des brevets

(11) **EP 3 087 357 B1**

(12) **FASCICULE DE BREVET EUROPEEN**

(45) Date de publication et mention de la délivrance du brevet:
**10.08.2022 Bulletin 2022/32**

(21) Numéro de dépôt: **14831003.0**

(22) Date de dépôt: **22.12.2014**

(51) Classification Internationale des Brevets (IPC):
**G01H 1/00** *(2006.01)* **G01P 3/44** *(2006.01)*
**G01P 3/487** *(2006.01)*

(52) Classification Coopérative des Brevets (CPC):
**G01H 1/006; G01P 3/487**

(86) Numéro de dépôt international:
**PCT/FR2014/053515**

(87) Numéro de publication internationale:
**WO 2015/097399 (02.07.2015 Gazette 2015/26)**

(54) **ENSEMBLE POUR TURBOMACHINE POUR MESURER DES VIBRATIONS SUBIES PAR UNE PALE EN ROTATION**

ANORDNUNG FÜR EINEN TURBINENMOTOR ZUR MESSUNG VON VIBRATIONEN EINES ROTORBLATTS

ASSEMBLY FOR TURBINE ENGINE FOR MEASURING VIBRATIONS SUSTAINED BY A ROTATING BLADE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2013 FR 1363471**

(43) Date de publication de la demande:
**02.11.2016 Bulletin 2016/44**

(73) Titulaire: **Safran Helicopter Engines**
**64510 Bordes (FR)**

(72) Inventeurs:
• **TALON, Arnaud**
**F-64420 Espoey (FR)**
• **ARROUGE, Gilbert**
**F-64280 Ogeu Les Bains (FR)**
• **CAZAUX, Jean-Yves**
**F-64230 Artiguelouve (FR)**
• **GARNIER, Julien**
**F-64110 Jurançon (FR)**

(74) Mandataire: **Regimbeau**
**20, rue de Chazelles**
**75847 Paris Cedex 17 (FR)**

(56) Documents cités:
FR-A1- 2 956 206        GB-A- 1 204 627
US-A- 2 575 710        US-A- 3 208 269
US-A- 4 757 717        US-A1- 2010 045 273
US-A1- 2013 236 293

**Description**

DOMAINE GENERAL

L'invention se rapporte au domaine des aubages mobiles en rotation.

L'invention concerne plus particulièrement le domaine de la caractérisation de vibrations auxquelles de tels aubages sont soumis lorsqu'ils sont mis en rotation.

ETAT DE L'ART

Une roue aubagée est un moyeu comportant une pluralité d'aubages, ou pales. Lors de la conception et de la certification de turbomachines, il est nécessaire de vérifier si une telle roue aubagée mobile en rotation dans un carter possède des fréquences propres susceptibles d'être excitées dans le domaine de fonctionnement du moteur de telles turbomachines.

Pour les modes propres identifiés dans ce domaine de fonctionnement, il est également nécessaire de quantifier les niveaux de contraintes vibratoires associées.

Une première technique connue pour caractériser les vibrations subies par des aubages en fonctionnement consiste en l'utilisation de jauges de déformation collées sur la roue aubagée. A partir d'une mesure de microdéformations en surface du matériau, il est possible de caractériser dans le domaine fréquentiel les aubages et de calculer les contraintes au sein du matériau.

Cette première technique comporte cependant de nombreux inconvénients.

Premièrement, les jauges collées sur les pales sont soumises à des efforts centrifuges colossaux (de l'ordre de 100000g) associés potentiellement à des températures très importantes, notamment lorsque l'instrumentation est faite sur une turbine haute pression. La durée de vie des jauges est par conséquent limitée.

Deuxièmement, la pose de jauge demande beaucoup de savoir-faire, de minutie et de temps (notamment pour la cuisson de ciments dans lesquels sont enchâssées les jauges).

Troisièmement, il est nécessaire de faire transiter le signal issu des jauges embarquées dans la roue aubagée mobile vers un repère fixe. Pour ce faire, des fils de connexion doivent cheminer sur l'arbre moteur jusqu'à un collecteur tournant. Outre la longueur des fils ainsi que la connexion tournante du collecteur, génératrices de bruit de mesures, les études préliminaires pour l'intégration d'un collecteur tournant sur un moteur sont longues et coûteuses.

Une deuxième technique, basée sur l'utilisation de sondes positionnées en vis-à-vis des pales en rotation, et donc dans un repère fixe, a été proposée afin de pallier ces inconvénients.

Cette deuxième technique met en œuvre une mesure des écarts de temps de passage devant les sondes optiques pour deux états vibratoires d'une pale (en présence ou non de vibrations). Un tel procédé de mesure, nommé « tip timing » en anglais, permet de recalculer des amplitudes de déplacements alternés en tête de pale. La connaissance des déformées modales permet de mettre en relation les niveaux de déplacement en tête de pale avec les niveaux de contraintes dans la pale.

Ce procédé de « tip timing », décrit dans les documents US 3,208,269 et US 4,757,717, utilise notamment des conducteurs présentant une forme en zig-zag disposés autour de l'axe de rotation de la pale.

Cette deuxième technique ne permet cependant pas d'obtenir d'information fréquentielle sur les vibrations mesurées. A cause de la forme en zig-zag des conducteurs utilisés, ne sont en effet identifiables par cette deuxième technique que des niveaux globaux de déplacements en tête de pale, sans savoir quel mode de pale se trouve excité. Dans un but de surveillance vibratoire, cette limitation peut être largement pénalisante.

Par ailleurs, la méthode de « tip timing » présente parfois des ambiguïtés ne permettant pas d'identifier l'ordre d'excitation responsable des niveaux de déplacements enregistrés. Une autre technique pour caractériser les vibrations est connue de US2575710.

PRESENTATION DE L'INVENTION

L'invention vise donc à permettre la caractérisation de vibrations subies par une pale lors de sa mise en rotation, notamment de mesurer des informations représentatives des fréquences de vibration de la pale.

Il est donc proposé, selon un premier aspect, un ensemble pour turbomachine selon la revendication 1.

Selon un deuxième aspect, il est aussi proposé un procédé de caractérisation de vibrations d'une pale d'un ensemble pour turbomachine selon le premier aspect, le procédé comprenant les étapes de :

- mise en rotation de la roue aubagée dans le carter,
- mesure aux bornes du conducteur électrique d'une tension électrique induite par l'aimant contenu dans la tête de la pale en vis-à-vis du carter,

- détermination d'informations représentatives des vibrations subies par la tête de la pale à partir de la tension électrique mesurée. L'aimant génère un champ magnétique. Au cours de la mise en rotation de la roue aubagée mobile en rotation par rapport au carter, le mouvement relatif du champ magnétique par rapport au conducteur électrique (mouvement dû à la rotation de la roue aubagée et à ses vibrations) induit un courant électrique dans le conducteur électrique compris dans le carter localisé en vis-à-vis de la tête de la pale qui comprend l'aimant. Ce courant électrique se propage jusqu'aux bornes du conducteur électrique. La tension à ces bornes permet de caractériser les vibrations subies par la pale, notamment d'identifier des fréquences de modes propres de la pale.

L'ensemble pour turbomachine selon le premier aspect, et le procédé selon le deuxième aspect permettent de s'affranchir de mesures directes de contraintes sur la roue aubagée, et d'éviter une instrumentation lourde dans le repère mobile lié à la pale, pour caractériser les vibrations de la pale munie de l'aimant. L'instrumentation réalisée est minimale dans ce repère mobile (seul un aimant est intégré à la pale) et également minimale dans le repère fixe lié au carter (insertion d'un conducteur électrique au carter), pour obtenir des informations équivalentes à celles obtenues au moyen des dispositifs de l'art antérieur décrit en introduction.

La tension mesurée aux bornes du conducteur électrique est représentative des vibrations de l'aimant effectuées hors du plan de parcours, mais cette tension est indépendante du mouvement rotatif de la pale autour de son axe de rotation (ainsi, dans une situation parfaite, dans laquelle la pale ne serait sujette à aucune vibration, la tension aux bornes du conducteur électriques lorsque l'aimant se trouve en vis-à-vis d'une portion de la partie centrale serait nulle).

De plus, le fait que la partie centrale du conduction est sur toute sa longueur dans le plan de parcours de l'aimant permet d'obtenir un signal de tension continu dans le temps exploitable pour analyse dans le domaine fréquentiel. Au contraire, les conducteurs en zig-zag utilisés dans les procédés de l'état de la technique ne permettent d'obtenir que des signaux parcellaires et segmentés, impropres à une analyse spectrale.

L'ensemble selon le premier aspect peut être complété par les caractéristiques suivantes, prises seules ou en une quelconque de leurs combinaisons techniquement possibles.

La partie centrale s'étendant autour de l'axe de rotation de la roue aubagée peut comporter deux extrémités localisées à des positions angulaires différentes autour de l'axe de rotation de la roue aubagée. Un tel mode de réalisation permet ainsi d'acquérir des informations de vibration pour différentes positions angulaires de la pale autour de l'axe de rotation de la roue aubagée ; par ailleurs, les positions angulaires différentes des deux extrémités de la partie centrales créent une discontinuité permettant l'obtention de « pics de spire » pouvant faire office de référence temporelle lors d'une mesure continue réalisée aux bornes du conducteur électrique.

La partie centrale peut en outre s'étendre sur moins de 360 degrés autour de l'axe de rotation afin notamment de simplifier le montage du conducteur électrique sur ou dans le carter. Dans un tel mode de réalisation, dans lequel la longueur de la partie centrale est raccourcie, un espace non couvert par le conducteur électrique est laissé autour de l'axe de rotation de la roue aubagée, entre les extrémités de sa partie centrale. Cet espace, également appelé « ouverture de spire ».

La partie centrale et les deux branches peuvent être coplanaires, chaque branche s'étendant depuis une extrémité respective radialement vers l'extérieur par rapport à l'axe de rotation de la roue aubagée.

L'aimant peut être en outre adapté pour émettre un champ magnétique orienté radialement par rapport à l'axe de rotation de la roue aubagée.

Les tensions aux bornes du conducteur électriques sont généralement faibles. Aussi, un amplificateur de tension peut être relié aux bornes du conducteur électrique, les mesures étant réalisées en sortie de cet amplificateur.

Le conducteur électrique est noyé au moins partiellement dans un dépôt abradable localisé sur une surface interne du carter en regard de la roue aubagée, le dépôt abradable étant réalisé en un matériau diamagnétique. Ainsi, le flux magnétique de l'aimant est alors très peu modifié, et on peut exploiter tout le flux magnétique généré par l'aimant dans les mesures réalisées.

L'ensemble peut en outre comprendre en outre un dispositif de mesure adapté pour appliquer une transformation de Fourier au signal de tension électrique de façon à produire un spectre représentatif de fréquences de vibrations de la pale.

DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 est une première vue en coupe partielle d'un ensemble pour turbomachine selon un mode de réalisation de l'invention.
- La figure 2 est une deuxième vue en coupe partielle de l'ensemble de la figure 1.
- La figure 3 est un organigramme d'étapes d'un procédé de caractérisation de vibrations subies par une pale, selon un mode de réalisation de l'invention.

- La figure 4 représente des repères associés à différents éléments de l'ensemble E représenté sur les figures 1 et 2.
- La figure 5 illustre schématiquement des interactions électromagnétiques entre des éléments de l'ensemble pour turbomachine illustré sur les figures 1 et 2.
- Les figures 6a à 6c représentent chacune un signal temporel de tension obtenu au cours de la mise en œuvre du procédé de la figure 3.
- La figure 7 représente un spectre correspondant au signal représenté en figure 6c.

Sur l'ensemble des figures, les éléments similaires portent des références identiques.

DESCRIPTION DETAILLEE DE L'INVENTION

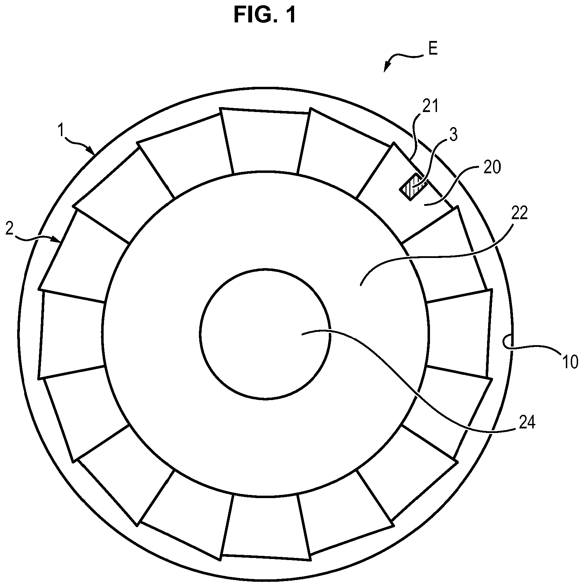

En référence la **figure 1,** un ensemble E pour turbomachine comprend un carter 1 et une roue aubagée 2 mobile en rotation par rapport au carter 1. La roue aubagée 1 est ici définie par un ensemble de pales (ou d'aubages) réparties sur la circonférence d'une roue.

Le carter 1 présente une surface interne 10 définissant un espace dans lequel est logé la roue aubagée 2. Cette surface interne 10 est par exemple cylindrique.

La roue aubagée 2 est montée sur un arbre moteur 24 s'étendant selon un axe de rotation (perpendiculaire au plan de la figure 1). La roue aubagée 2 comprend un disque 22 autour de l'arbre 24, et une pluralité de pales. Chaque pale s'étend sensiblement radialement depuis le disque 22 jusqu'à se terminer par une tête respective. Ainsi, la tête de chaque pale est en vis-à-vis d'une portion de surface du carter 1, quelle que soit la position angulaire occupée par la roue aubagée 2 mobile relativement au carter 1.

Au moins une des pales de la roue aubagée, référencée 20, comporte en sa tête 21 un aimant 3. L'aimant peut par exemple affleurer le rayon maximal de la tête de la pale, par rapport à l'axe de rotation.

L'aimant 3 est solidaire de la pale 20, elle-même solidaire du disque 22 ; on considéra dans la suite que le mouvement de l'aimant 3 est représentatif du mouvement de la tête 21 de la pale 20.

La topologie du champ magnétique créé par l'aimant 3 est similaire à celle d'un solénoïde à plusieurs spires : elle forme un tore entourant l'aimant 3 et orientées de son pôle nord vers son pôle sud. L'aimant 3 adapté pour générer un champ magnétique d'orientation radiale par rapport à l'axe de rotation de la roue aubagée 2.

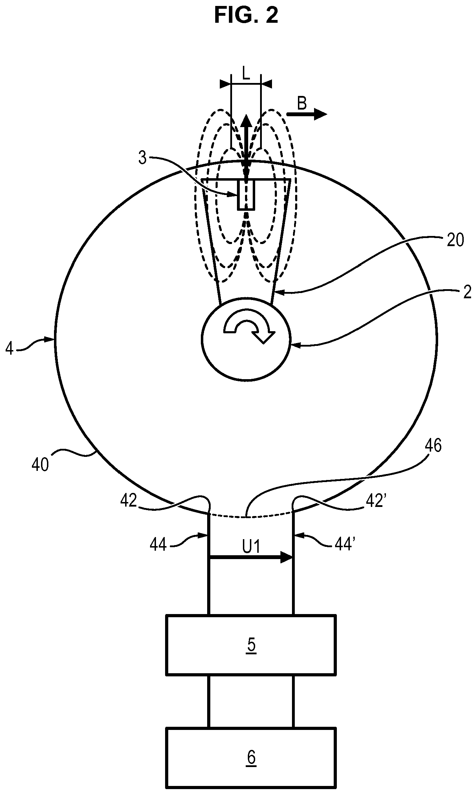

En référence à la figure 2, le carter 1 comprend un conducteur électrique 4.

Le conducteur électrique 4 comprend une partie dite « centrale » formant une spire ou une portion de spire autour de l'axe de rotation de la roue aubagée 2. Cette partie centrale 40 est par exemple fixée sur la surface interne 10 du carter 1 en regard de la roue aubagée 2.

La partie centrale 40 comporte deux extrémités 42, 42' localisés à des positions angulaires différentes autour de l'axe de rotation de la roue aubagée 2.

Le conducteur électrique 4 comprend également deux branches 44, 44' prolongeant chacune une extrémité respective de la partie centrale 40.

De préférence, la partie centrale 40 ne s'étend pas sur toute la circonférence du carter 1 autour de l'axe de rotation de la roue aubagée 2, mais forme un arc de cercle formé par un secteur angulaire de moins de 360 degrés autour de l'axe de rotation de la roue aubagée. Les deux extrémités 42, 42' délimitent alors une portion de circonférence du carter 1 non couverte par la partie centrale 40 ; cette potion non couverte est qualifié dans la suite « d'ouverture de spire », référencée 46.

Dans une variante non illustrée, la partie centrale s'étend sur plus d'un tour complet autour de l'axe de rotation de la roue aubagée.

Les branches 44, 44' s'étendent dans une direction sensiblement radiale vers l'extérieur par rapport à l'axe de rotation de la roue aubagée 2 dans le carter 1. Chaque branche 44 (respectivement 44') forme par exemple avec la partie centrale 40, en l'extrémité 42 (respectivement 42') qu'elle prolonge, un angle compris entre 80 degrés et 100 degrés, préférentiellement 90 degrés.

La partie centrale 40 s'étend, sur toute sa longueur entre les extrémités 42, 42', dans un plan qui coïncide avec un plan de parcours de l'aimant 3 au cours d'une révolution de la pale 20 autour de l'axe de rotation de la roue aubagée 2.

Les branches 44, 44' qui prolongent cette partie centrale 40 peuvent également s'étendre dans ce même plan de parcours.

Lorsque la roue aubagée 2 occupe une position angulaire telle que l'aimant 3 se trouve en vis-à-vis d'un point de la partie centrale 40, le mouvement vibratoire relatif du champ magnétique généré par l'aimant 3 par rapport à la partie centrale 40 induit un courant électrique dans une portion de la partie centrale 40 de longueur L au voisinage de ce point, courant qui se propage jusqu'aux bornes formées par les branches 44, 44'. Une tension U1 est alors générée entre les deux bornes du conducteur électrique 4.

Dans le mode de réalisation illustré sur la **figure 2,** la partie centrale 40 du premier conducteur électrique 4 définit une portion de cercle centré sur un point de l'axe de rotation; de cette manière, l'entrefer entre l'aimant 3 et un point quelconque de la partie centrale 40 est une distance constante. En variante, la partie centrale peut en outre présenter d'autres formes qu'une forme circulaire ou en portion de cercle.

Les bornes du conducteur électrique 4 sont reliées à l'entrée d'un amplificateur 5 de tension.

La sortie de l'amplificateur 5 de tension est reliée à un dispositif de mesure 6 de tension comprenant des moyens pour mettre en œuvre une analyse spectrale d'un signal temporel de tension amplifiée par l'amplificateur 5.

*Principe général de procédé de caractérisation de vibrations de pale*

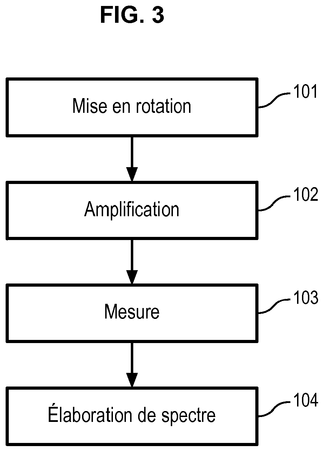

Sont représentées sur la **figure 3** les étapes d'un procédé de caractérisation de vibrations subies par la pale 20 comprenant l'aimant 3.

Dans une étape préliminaire 101, la roue aubagée 2 est mise en rotation autour de son axe de rotation. Cette mise en rotation est susceptible de susciter des vibrations de la pale 20.

Une période de révolution de la pale 20 autour de l'axe de rotation de la roue aubagée 2 comprend deux phases différentes, correspondant chacune à une gamme respective de positions angulaires de la roue aubagée 2 mobile par rapport au carter 1 : une phase au cours de laquelle l'aimant 3 se trouve en vis-à-vis d'une portion de la partie centrale 40, et une phase au cours de laquelle l'aimant 3 se trouve en vis-à-vis de l'ouverture de spire 46 laissée entre ses deux extrémités 42, 42'.

Lorsque l'aimant 3 est en vis-à-vis d'une portion de la partie centrale 40, le mouvement vibratoire relatif du champ magnétique B généré par l'aimant 3 par rapport à la partie centrale 40 induit un courant électrique dans la partie centrale 40, qui se propage jusqu'aux bornes formées par les branches 44, 44'. Une tension U1 est alors générée entre les deux bornes du conducteur électrique 4.

Cette tension U1, généralement très faible, est amplifiée par l'amplificateur 5 au cours d'une étape 102.

Dans une étape 103, le dispositif de mesure 6 acquiert, à partir de la tension amplifiée par l'amplificateur 5, un signal temporel de tension d'une durée supérieure à la période de révolution de la pale 20 autour de l'axe de rotation.

Dans une étape 104, le dispositif calcule la transformée de Fourier du signal temporel de tension acquis. Le résultat de cette transformée constitue un spectre représentatif des fréquences vibratoires de la pale 20 dans laquelle est embarquée l'aimant 3.

Comme la partie centrale 40 du conducteur s'étend de façon continue dans le plan de parcours de l'aimant, le signal temporel obtenu lors du passage de l'aimant le long de la partie centrale 40 est également continu. Un tel signal continu est riche en informations fréquentielles exploitables après le calcul de la transformée de Fourier.

A l'opposé, un conducteur présentant une forme en zig-zag, conformément à la méthode « tip-timing », n'est pas constamment dans le plan de parcours de l'aimant. Un signal acquis par un tel conducteur en zig-zap est discontinu, et de ce fait insuffisamment échantillonné pour autoriser une transformation de Fourier de ce signal, en vue d'exploiter les informations fournies par le spectre résultant de cette transformation de Fourier.

Les actions électromagnétiques de l'aimant 3 au cours de ces deux phases vont maintenant être décrites plus en détail.

*Action électromagnétique de l'aimant lorsqu'il se trouve en vis-à-vis de la partie centrale*

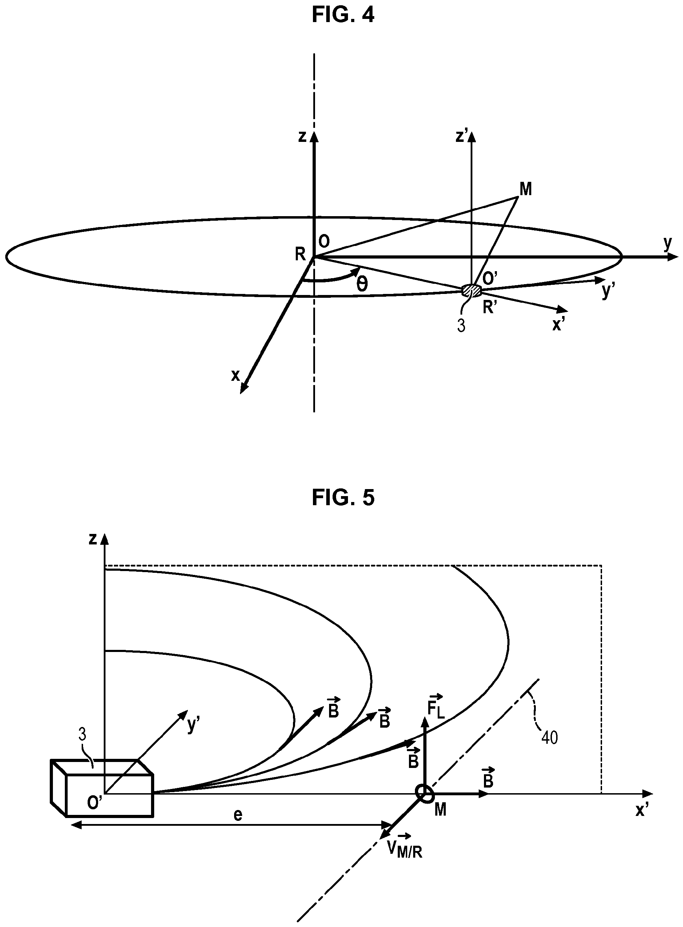

En référence à la **figure 4,** on définit à titre préliminaire un repère fixe R associé au carter 1, et un repère mobile R' associé à l'aimant 3.

Le repère fixe R est défini par un centre O, l'axe de rotation de la roue aubagée 2, référencé z, et des axes x et y définissant un plan perpendiculaire à l'axe moteur et contenant le mouvement de l'aimant 3.

Le repère R' mobile est défini par un centre O' représentatif de la position de l'aimant 3, un axe z' parallèle à l'axe z, un axe x' porté par la droite OO', et un axe tel que le repère R' est un trièdre direct. Le repère mobile R' forme un angle θ par rapport au repère fixe R.

De façon générale, les lois de changement de repère de R à R' d'un point M dans le repère R' imposent la relation suivante :

$$\overrightarrow{V_{M/R}} = \overrightarrow{V_{O'/R}} + \overrightarrow{V_{M/R'}}$$

En référence à la **figure 5,** on considère comme point M un point de la partie centrale 40. On peut alors écrire :

$$\overrightarrow{V_{O'/R}} = -\overrightarrow{V_{M/R'}}$$

Cette relation montre que, de façon équivalente, l'aimant 3 en tête de pale 20 se déplace face à la partie centrale 40 fixe dans le repère fixe, ou que la partie centrale 40 se déplace face à l'aimant 3 fixe dans le repère mobile.

Si on considère un électron appartenant à la partie centrale 40, immobile dans le repère fixe R, sa vitesse apparente dans le repère tournant R' sera le vecteur $\overrightarrow{V_{M/R'}}$, c'est-à-dire la vitesse qu'aurait un point du repère tournant dans le repère fixe à la distance r + e, où e désigne l'entrefer entre l'aimant 3 et la partie centrale 40 et r la distance OO'.

Si on considère que ce point M est parfaitement dans l'axe de l'aimant 3 O'x', la résultante Fl de la force de Lorentz qui s'appliquera sur l'électron sera orientée comme le montre la figure 5.

On peut considérer le dispositif dans le plan O'x'z et les composantes du champ B peuvent être considérés seulement sur les composantes x' et z. La vitesse d'avancement de l'électron dans le repère tournant est celle qu'aurait un point fixe dans le repère tournant à la distance r + e, prenant en compte le rayon r de l'aube et l'entrefer e entre l'aimant 3 et l'abscisse dans le repère tournant du point M. On peut alors écrire le champ électromoteur de la manière suivante :

$$\vec{E}_M = \vec{v}_{M/R'} \times \vec{B} = \begin{vmatrix} 0 \\ (r+e)\dot{\theta} \\ 0 \end{vmatrix} \times \begin{vmatrix} B_{x'} \\ B_{y'} \\ B_{z'} \end{vmatrix} = \begin{vmatrix} (r+e)\dot{\theta}B_{z'} \\ 0 \\ -(r+e)\dot{\theta}B_{x'} \end{vmatrix} = \begin{vmatrix} E_{x'} \\ E_{y'} \\ E_{z'} \end{vmatrix}$$

Lorsque l'aimant 3 est soumis à des vibrations de la pale 20, Le champ électromoteur ainsi généré par le mouvement vibratoire de la pale 20 devient :

$$\vec{E}_M = \vec{V'} \times \vec{B} = \begin{vmatrix} v_{VIBx} \\ (r+e)\dot{\theta} + v_{VIBy} \\ v_{VIBz} \end{vmatrix} \times \begin{vmatrix} B_{x'} \\ B_{y'} \\ B_{z'} \end{vmatrix} = \begin{vmatrix} (r+e)\dot{\theta}B_{z'} + v_{VIBy}B_{z'} - v_{VIBz}B_{y'} \\ v_{VIBz}B_{x'} - v_{VIBx}B_{z'} \\ v_{VIBx}B_{y'} - (r+e)\dot{\theta}B_{x'} - v_{VIBy}B_{x'} \end{vmatrix} = \begin{vmatrix} E_{Mx'} \\ E_{My'} \\ E_{Mz'} \end{vmatrix}$$

où :

$$\overrightarrow{V_{M/R'}} + \overrightarrow{V_{M/R'}} = \overrightarrow{V'}$$

Un courant induit dans la partie centrale 40 est mesurable lorsque le champ électromoteur sera orienté selon la composante y, c'est-à-dire dans l'axe du conducteur. Une composante mesurable sera donc :

$$\overrightarrow{E_{Mutile}} = (Vvibz.B_{x'} - Vvibx.B_{z'})\overrightarrow{e'_y}$$

Par ailleurs si on fait l'hypothèse que l'aimant 3 est contenu dans le plan de la partie centrale 40, cette composante se réécrit :

$$\overrightarrow{E_{Mutile}} = (Vvibz.B_{x'})\overrightarrow{e'_y}$$

En conséquence, dans le cas où l'aimant 3 est dans le plan de la partie centrale 40, seul un comportement vibratoire selon l'axe z (l'axe de rotation) conduira à des courants induits mesurables. En l'absence d'activité vibratoire, il n'y aura donc pas de signal mesurable.

La tension instantanée U1 mesurée aux bornes du conducteur électrique 4 alors qu'un segment AB est présent dans le champ d'influence de l'aimant 3 s'exprime alors sous la forme suivante :

$$U_1 = \int_A^B \vec{E}_m . \overrightarrow{dl} = \int_A^B V_{VIBz} B_{x'} \, \vec{e}_\theta . \overrightarrow{dl} = V_{VIBz} B_{x'} \, l_{AB}$$

où $l_{AB}$ désigne la longueur du segment AB soumis à l'influence de l'aimant 3, $B_{x'}$ est la composante radiale du champ magnétique généré par l'aimant 3, et Vvibz est la composante de vitesse vibratoire de l'aimant 3 selon l'axe x.

*Action électromagnétique de l'aimant lorsqu'il se trouve en vis-à-vis de l'ouverture de spire*

Lorsque l'aimant 3 est en vis-à-vis de l'ouverture de spire 46, le conducteur électrique 4 s'échappe de l'influence du champ magnétique B de l'aimant 3, phénomène qui génère naturellement des courants induits.

Cette ouverture de spire 46 étant réalisée selon l'axe x', seule la composante x' du champ électromoteur génère une tension dans les branches 44, 44' de sortie de la partie centrale 40.

Le champ électromoteur généré dans les branches 44, 44' de sortie de la partie centrale 40 est proportionnel d'une part à la vitesse de rotation du rotor et d'autre part à la composante du champ magnétique.

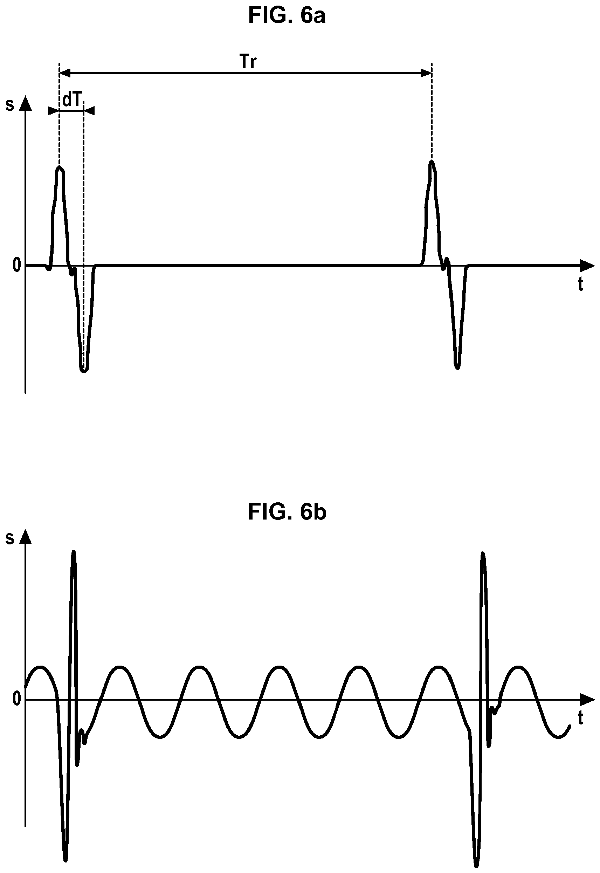

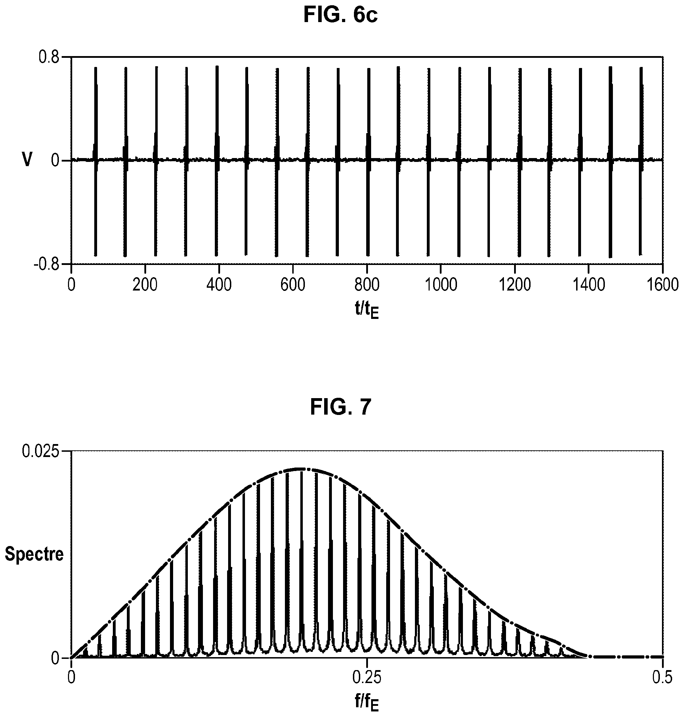

Le passage de la pale 20 instrumentée devant cette ouverture de spire 46 provoque ce qu'on nomme un « pic de spire » dans le signal temporel de tension mesuré par le dispositif de mesure 6 tel que celui représenté sur la **figure 6**. L'ouverture de spire 46 permet donc la formation de tels pics de spire.

Les pics de spire constituent des informations d'intérêt dans le signal de tension temporel mesuré par le dispositif de mesure 6. En effet, ils peuvent servir de référence temporelle pour mesurer la vitesse de rotation de la roue aubagée 2 autour de son axe. Ils sont par ailleurs représentatifs de la sensibilité des mesures effectuées.

Ces pics de spire introduisent toutefois des harmoniques pouvant gêner l'interprétation du signal temporel de tension ou du spectre correspondant élaboré par le dispositif de mesure 6.

Il peut donc s'avérer intéressant de minimiser la présence de ces pics dans le signal temporel de tension.

L'étendue temporelle des pics de spire peut être minimisée en réduisant la taille de l'ouverture de spire 46 : on peut par exemple prévoir des extrémités 42, 42' distantes d'un arc formé par un secteur angulaire autour de l'axe de rotation de la roue aubagée de moins de 20 degrés, voire moins de 10 degrés. En minimisant l'ouverture de spire, on maximise le temps pendant lequel la partie centrale 40 va être sensible aux vibrations de la roue aubagée 20

Les pics de spire peuvent être en outre minimisés en orientant chaque branche du conducteur électrique 4 selon un angle compris entre 80 et 100 degrés, préférentiellement 90 degrés, par rapport à l'extrémité de la partie centrale 40 que cette branche prolonge. Cette orientation d'angle permet en outre de faciliter l'intégration des branches dans le carter 1.

*Analyse temporelle*

Le signal temporel en tension s(t) enregistré aux bornes de la partie centrale 40 est alors l'image directe de la composante de vitesse vibratoire de la pale 20 parallèle à l'axe de rotation z' de la roue aubagée 2.

Dans une situation idéale dans laquelle la pale 20 n'est soumise à aucune vibration, le signal obtenu s(t) peut être vu comme la répétition d'un motif m(t) dépendant du régime moteur. Ce signal peut ainsi être vu comme la convolution de ce motif m(t) avec un peigne de Dirac $\delta_{Tr}(t)$ ayant comme période Tr la période de révolution de l'aimant 3 autour de l'axe de rotation de la roue aubagée 2.

$$s(t) = m(t) * \delta_{Tr}(t)$$

On a représenté sur la **figure 6a** un signal s(t) correspondant à une telle situation idéale, et comprenant deux pics de spires de durée dT.

Dans une situation réelle, au cours de laquelle l'aimant 3 est soumis à un mouvement vibratoire de la tête 21 de la pale 20, le signal temporel de tension devient :

$$s(t) = m(t) * \delta_{Tr}(t) + s_v(t)$$

où $s_v(t)$ est une composante vibratoire. Un exemple d'un tel signal est représenté sur la **figure 6b.** Si, au cours de la rotation, l'aube est animée d'un mouvement vibratoire comportant une composante axiale au niveau de l'aimant 3, le mouvement vibratoire induit une tension proportionnelle (pour les petits déplacements) à sa vitesse axiale.

On a par ailleurs représenté sur la **figure 6c** un signal temporel de tension pendant une durée supérieure à la période de révolution de la pale ; sont dès lors présents dans ce signal une pluralité de pics de spire.

*Analyse spectrale*

Un spectre $S(f)$ correspondant au signal s(t), obtenu au cours de l'étape 104, et par ailleurs représenté sur la **figure 7,** s'exprime alors sous la forme :

$$S(f) = M(f)\delta_{Fr}(f) + Sv(f)$$

où M(f) est le spectre du motif m(t) et Sv(f) le spectre du signal vibratoire sv(t) et Fr est la fréquence de rotation de la roue aubagée 2 correspondant à la période Tr.

On constate donc que la représentation fréquentielle du signal mesuré aux bornes du conducteur électrique 4 sera composée du spectre de la composante vibratoire, d'un terme additif correspondant à l'ensemble des motifs. Ce dernier terme sera un peigne de Dirac à la fréquence Fr, modulé par le spectre du motif m(t).

L'analyse de signature de turbines se fait généralement en fonction des régimes des différents mobiles générateurs (NG) ou turbines libres. En effet ces mobiles constituent les principales sources d'excitations dans une turbomachine on représente donc l'évolution du contenu spectral en fonction du régime d'excitation. A un régime d'un mobile est associée une fréquence d'excitation fexc telle que fexc=régime/60.

On peut donc représenter la variation du contenu spectral du signal $S(f)$ en fonction du régime de la roue aubagée 2. Pour ce faire, l'étape de mesure 103 est répétée, chaque mesure débutant lorsqu'une condition de déclenchement prédéterminée. Les différents signaux temporels acquis correspondent chacun à une fenêtre d'observation respective de même durée ou largeur temporelle.

L'acquisition de chaque fenêtre temporelle se fait par exemple en fonction d'une condition de variation du régime. Chaque fois que la condition sera respectée, on réalisera l'acquisition d'une fenêtre d'observation, et le calcul d'un spectre correspondant (étape 104).

On peut typiquement déclencher le début d'une acquisition à chaque fois que le régime augmente d'un pas de vitesse prédéterminée, par exemple 60 tr/min, ou bien périodiquement.

Les fenêtres temporelles peuvent être temporellement jointives ou bien non-jointives. En pratique les fenêtres d'observation sont avantageusement jointives de manière à être sûr de pouvoir suivre temporellement l'évolution du spectre. La largeur de chaque fenêtre est pilotée à la fois en fonction d'une résolution fréquentielle souhaitée et d'un taux de « rafraichissement » du spectre.

Chaque spectre peut être déterminé à partir d'un signal temporel respectif, comme vu précédemment, ou bien en variante, à partir d'une moyenne de N signaux temporels dont l'acquisition est déclenchée successivement.

En tout état de cause, la répétition des étapes 103 et 104 produit une pluralité de spectres pouvant être combinés de façon à élaborer différents types de diagrammes d'intérêt connus de l'homme du métier tels qu'un un diagramme temps-fréquence ou un diagramme de Campbell.

Un diagramme temps-fréquence, permettant de visualiser l'évolution du spectre associé aux vibrations de la tête 21 en fonction du temps (la transformée de Fourier mise en œuvre est alors une transformée de Fourier « à court terme », ou « Short time Fourier transform » en anglais). Dans ce cas, des fenêtres d'observations se recouvrant partiellement sont avantageuses car permettent d'améliorer la résolution temporelle et fréquentielle d'un tel diagramme temps-fréquence.

Un diagramme de Campbell permet de visualiser l'évolution du spectre associé aux vibrations de la tête 21 en fonction du régime moteur.

Les conséquences sur l'analyse en fréquence du signal du spectre ainsi élaboré sont de plusieurs ordres :

- L'ensemble des ordres moteurs est clairement matérialisé sur le spectre par le peigne de Dirac dont la fréquence est synchrone au régime.
- L'amplitude des différents ordres moteurs sera modulée en fréquence par le spectre du motif de spire, ce qui diminuera d'autant les amplitudes des pics au voisinage des limites de la bande d'analyse
- Les termes correspondants aux ordres moteurs et au signal utile sont additifs, ce qui permet de mieux mettre en évidence les phénomènes de résonances de pales éventuels, par contre chaque résonance identifiée entre un mode de pale 2 et un ordre moteur sera la somme de ces deux contributions (et donc pas représentatif de l'amplitude vibratoire de la pale).

Les spectres élaborés peuvent faire l'objet d'autres traitements dans le domaine fréquentiel. Pour mettre en œuvre de tels traitements, l'homme du métier pourra se référer à l'ouvrage de M. Kay intitulé « Modem Spectral Estimation ».

*Matériaux*

Le conducteur électrique 4 peut être positionné directement sur la surface interne 10 du carter 1, en regard de la roue aubagée 2.

En variante, le conducteur peut être positionné à l'intérieur du carter 1, en s'assurant toutefois que toute portion de matière du carter 1 localisée entre le conducteur électrique 4 et l'aimant 3 autorise une bonne transmission du champ magnétique généré par l'aimant 3 jusqu'à une portion du conducteur électrique 4. On pourra alors veiller à réaliser ladite portion de matière en un matériau paramagnétique et diamagnétique, ces matériaux présentant en effet des valeurs de perméabilité magnétiques proche de 1. Ainsi, le flux magnétique de l'aimant 3 serait très peu modifié, on pourra donc exploiter tout le flux magnétique généré par l'aimant 3 dans les mesures réalisées.

Le conducteur électrique 4 est toute ou partie noyé dans un dépôt abradable localisé sur la surface interne 10 du carter 1 en regard de la roue aubagée 2, le dépôt abradable étant réalisé en un tel matériau diamagnétique.

L'aimant 3 peut en outre être constitué en aluminium-nickel-cobalt (AlNiCo) avec un point de curie entre 800°C et 850°C (le point de curie étant la température à laquelle le matériau perd son aimantation spontanée).

L'amplificateur 5 peut être un amplificateur de type à courant constant, permettent avantageusement d'appliquer des gains jusqu'à 3000. Il est ainsi possible d'amplifier la tension aux bornes du conducteur électrique 4 pour obtenir une tension mesurable de l'ordre du millivolt.

L'ensemble E pour turbomachine décrit est applicable à tout type de roue aubagée mobile en rotation dans une structure fixe assimilable à un carter: roues axiales, rouets centrifuges, turbines haute pression, turbines libres, etc.

Une turbomachine comprenant un tel ensemble E peut également être embarquée dans tout type de véhicule, notamment un aéronef.

## Revendications

1. Ensemble (E) pour turbomachine, l'ensemble (E) comprenant un carter (1) et une roue aubagée (2) mobile en rotation dans le carter (1), la roue aubagée (2) comportant au moins une pale (20) présentant une tête (21) en vis-à-vis du carter (1), la tête (21) comportant un aimant (3) et le carter (1) comportant un conducteur électrique (4) adapté pour générer entre ses bornes un signal de tension électrique induite par l'aimant (3) de la tête (21) en vis-à-vis et représentative de vibrations subies par la tête (21) de la pale (20) lors de la mise en rotation de la roue aubagée (2), dans lequel le conducteur électrique (4) comprend une partie centrale (40) qui forme une spire ou une portion de spire s'étendant dans un plan de parcours de l'aimant (3) autour de l'axe de rotation (z) de la roue aubagée (2), **caractérisé en ce que** le conducteur électrique (4) est noyé au moins partiellement dans un dépôt abradable localisé sur une surface interne (10) du carter (1) en regard de la roue aubagée (2), le dépôt abradable étant réalisé en un matériau diamagnétique.

2. Ensemble (E) selon la revendication 1, dans lequel la partie centrale (40) comporte deux extrémités (42, 42') localisées à des positions angulaires différentes autour de l'axe de rotation (z) de la roue aubagée (2).

3. Ensemble (E) selon l'une des revendications 1 et 2, dans lequel la partie centrale (40) s'étend sur moins de 360 degrés autour de l'axe de rotation (z) de la roue aubagée (2).

4. Ensemble (E) selon l'une des revendications 2 et 3, dans lequel la partie centrale (40) présente une forme circulaire centrée sur l'axe de rotation (z) de la roue aubagée (2).

5. Ensemble (E) selon l'une des revendications 2 à 4, dans lequel le conducteur électrique (4) comprend également deux branches (44, 44') formant les bornes du conducteur électrique (4), chaque branche s'étendant depuis une extrémité respective (42 ou 42') de la partie centrale (40) radialement vers l'extérieur par rapport à l'axe de rotation (z) de la roue aubagée (2), la partie centrale (40) et les deux branches (44, 44') étant coplanaires.

6. Ensemble (E) selon l'une des revendications 1 à 5, dans lequel l'aimant (3) est adapté pour émettre un champ magnétique (B) orienté radialement par rapport à l'axe de rotation (z) de la roue aubagée (2).

7. Ensemble (E) selon l'une des revendications 1 à 6, comprenant en outre un amplificateur (5) de tension relié aux bornes du conducteur électrique (4).

8. Ensemble (E) selon l'une des revendications 1 à 7, comprenant en outre un dispositif de mesure (6) adapté pour appliquer une transformation de Fourier au signal de tension électrique de façon à produire un spectre représentatif de fréquences de vibrations de la pale (20).

9. Procédé de caractérisation de vibrations d'une pale (20) d'un ensemble (E) pour turbomachine selon l'une des revendications 1 à 8, le procédé comprenant les étapes de :

- mise en rotation (101) de la roue aubagée (2) dans le carter (1),
- mesure (103) aux bornes du conducteur électrique (4) d'un signal de tension électrique induite par l'aimant (3) contenu dans la tête (21) de la pale (20) en vis-à-vis du carter (1),
- détermination (104) d'informations représentatives des vibrations subies par la tête (21) de la pale (20) à partir de la tension électrique mesurée.

10. Procédé de caractérisation selon la revendication 9, dans lequel l'étape de mesure (103) de tension électrique, réalisée continûment pendant au moins une révolution de la pale (20), fournit un signal temporel de tension, et l'étape de détermination (104) comprend une transformation de Fourier du dudit signal temporel en un spectre représentatif de fréquences de vibrations de la pale (20).

11. Procédé de caractérisation selon l'une des revendications 9 et 10, comprenant en outre une étape d'amplification (102) de la tension électrique induite par l'aimant (3), mise en œuvre avant l'étape de mesure (103).

**Patentansprüche**

1. Anordnung (E) für einen Turbomotor, wobei die Anordnung (E) ein Gehäuse (1) und ein beschaufeltes Rad (2) umfasst, das im Gehäuse (1) in Rotation mobil ist, wobei das beschaufelte Rad (2) wenigstens ein Rotorblatt (20) umfasst, das einen Kopf (21) gegenüber dem Gehäuse (1) aufweist, wobei der Kopf (21) einen Magneten (3) umfasst und das Gehäuse (1) einen elektrischen Leiter (4) umfasst, der geeignet ist, um zwischen seinen Anschlüssen ein elektrisches Spannungssignal zu erzeugen, das vom Magnet (3) des Kopfes (21) gegenüber erzeugt ist und Vibrationen darstellt, denen der Kopf (21) des Rotorblattes (20) unterzogen wird, wenn das beschaufelte Rad (2) in Rotation gebracht wird, in dem der elektrische Leiter (4) einen zentralen (41) Teil umfasst, der eine Wicklung oder einen Wicklungsabschnitt bildet, der sich in einer Verlaufsebene des Magnets (3) um die Rotationsachse (z) des beschaufelten Bereichs (2) erstreckt, **dadurch gekennzeichnet, dass** der elektrische Leiter (4) wenigstens teilweise in einer abriebfähigen Lagerung versenkt ist, die auf einer internen Oberfläche (10) des Gehäuses (1) gegenüber dem beschaufelten Rad (2) angeordnet ist, wobei die abriebfähige Lagerung aus einem diamagnetischen Material realisiert ist.

2. Anordnung (E) gemäß Anspruch 1, bei der der zentrale Teil (40) zwei Enden (42, 42') umfasst, die in unterschiedlichen Winkelpositionen um die Rotationsachse (z) des beschaufelten Rades (2) angeordnet sind.

3. Anordnung (E) gemäß einem der Ansprüche 1 und 2, bei der der zentrale Teil (40) sich über wenigstens 360 Grad um die Rotationsachse (z) des beschaufelten Rades (2) erstreckt.

4. Anordnung (E) gemäß einem der Ansprüche 2 und 3, bei der der zentrale Teil (40) eine Kreisform aufweist, die um die Rotationsachse (z) des beschaufelten Rades (2) zentriert ist.

5. Anordnung (E) gemäß einem Ansprüche 2 bis 4, bei der der elektrische Leiter (4) ebenfalls zwei Zweige (44, 44') umfasst, die die Anschlüsse des elektrischen Leiters (4) bilden, wobei sich jeder Zweig von einem jeweiligen Ende (42 oder 42') des zentralen Teils (40) radial zur Außenseite im Verhältnis zur Rotationsachse (z) des beschaufelten Rades (2) erstreckt, wobei der zentrale Teil (40) und die zwei Zweige (44, 44') sich koplanar erstrecken.

6. Anordnung (E) gemäß einem der Ansprüche 1 bis 5, bei der der Magnet (3) geeignet ist, um ein Magnetfeld (B) auszugeben, das in Bezug auf die Rotationsachse (z) des beschaufelten Rades (2) radial ausgerichtet ist.

7. Anordnung (E) gemäß einem der Ansprüche 1 bis 6, umfassend darüber hinaus einen Spannungsverstärker (5), der mit den Anschlüssen des elektrischen Leiters (4) verbunden ist.

8. Anordnung (E) gemäß einem der Ansprüche 1 bis 7, umfassend darüber hinaus eine Messvorrichtung (6), die geeignet ist, um eine Fourier-Transformation auf das elektrische Spannungssignal derart anzuwenden, dass ein Spektrum erzeugt wird, das Vibrationsfrequenzen des Rotorblattes (20) darstellt.

9.  Charakterisierungsverfahren von Vibrationen eines Rotorblattes (20) einer Anordnung (E) für einen Turbomotor gemäß einem der Ansprüche 1 bis 8, wobei das Verfahren die Schritte umfasst:

    - das beschaufelte Rad (2) im Gehäuse (1) zum Rotieren zu bringen (100),
    - Messen (103) eines elektrischen Spannungssignals, das von dem Magnet (3) induziert ist, der im Kopf (21) des Rotorblattes (20) gegenüber dem Gehäuse (1) enthalten ist, an den Anschlüssen des elektrischen Leiters (4),
    - Bestimmen (104) von Informationen, die Vibrationen darstellen, denen der Kopf (21) des Rotorblattes (20) ausgehend von der gemessenen elektrischen Spannung unterzogen ist.

10. Charakterisierungsverfahren gemäß Anspruch 9, bei dem der Messschritt (103) der elektrischen Spannung, der während wenigstens einer Drehung des Rotorblattes (20) kontinuierlich realisiert ist, ein Spannungszeitsignal liefert und der Bestimmungsschritt (104) eine Fourier-Transformation des genannten Zeitsignals in ein Spektrum umfasst, das Vibrationsfrequenzen des Rotorblattes (20) darstellt.

11. Charakterisierungsverfahren gemäß einem der Ansprüche 9 und 10, umfassend darüber hinaus einen Verstärkungsschritt (102) der elektrischen Spannung, die vom Magnet (3) induziert ist, der vor dem Messschritt (103) umgesetzt ist.

**Claims**

1.  Assembly (E) for a turbomachine, the assembly (E) comprising a casing (1) and an impeller (2) which can rotate in the casing (1), the impeller (2) comprising at least one blade (20) having a head (21) facing the casing (1), the head (21) comprising a magnet (3) and the casing (1) comprising an electrical conductor (4) adapted to generate between its terminals an electrical voltage signal induced by the magnet (3) of the head (21) facing it and representative of vibrations undergone by the head (21) of the blade (20) when the bladed wheel (2) is rotated in which the electrical conductor (4) comprises a central part which forms a turn or a portion of a turn extending in a plane of travel of the magnet (3) about the axis of rotation (z) of the bladed wheel (2), **characterised in that** the electrical conductor (4) is at least partially embedded in an abradable deposit located on an internal surface (10) of the casing (1) facing the bladed wheel (2), the abradable deposit being made of a diamagnetic material.

2.  An assembly (E) according to claim 1, wherein the central portion (40) has two ends (42, 42') located at different angular positions about the axis of rotation (z) of the impeller (2).

3.  An assembly (E) according to any of claims 1 and 2, wherein the central portion (40) extends for less than 360 degrees about the axis of rotation (z) of the impeller (2).

4.  An assembly (E) according to any of claims 2 and 3, wherein the central portion (40) has a circular shape centred on the axis of rotation (z) of the bladed wheel (2).

5.  An assembly (E) according to any of claims 2 to 4, wherein the electrical conductor (4) also comprises two legs (44, 44') forming the terminals of the electrical conductor (4), each leg extending from a respective end (42 or 42') of the central portion (40) radially outwardly with respect to the axis of rotation (z) of the impeller (2), the central portion (40) and the two legs (44, 44') being co-planar.

6.  An assembly (E) according to any of claims 1 to 5, wherein the magnet (3) is adapted to emit a magnetic field (B) oriented radially with respect to the axis of rotation (z) of the impeller (2).

7.  An assembly (E) according to any of claims 1 to 6, further comprising a voltage amplifier (5) connected across the electrical conductor (4).

8.  An assembly (E) according to any of claims 1 to 7, further comprising a measuring device (6) adapted to apply a Fourier transformation to the electrical voltage signal so as to produce a spectrum representative of vibration frequencies of the blade (20).

9.  A method of characterising vibrations of a blade (20) of a turbomachinery assembly (E) according to any of claims 1 to 8, the method comprising the steps of:

- the impeller (2) in the housing (1),
- measurement (103) across the electrical conductor (4) of an electrical voltage signal induced by the magnet (3) contained in the head (21) of the blade (20) opposite the housing (1),
- determining (104) information representative of the vibrations experienced by the head (21) of the blade (20) from the measured electrical voltage.

10. A characterisation method according to claim 9, wherein the electrical voltage measurement step (103), performed continuously during at least one revolution of the blade (20), provides a temporal voltage signal, and the determination step (104) comprises a Fourier transformation of said temporal signal into a spectrum representative of vibration frequencies of the blade (20).

11. A characterisation method according to any of claims 9 and 10, further comprising a step of amplifying (102) the electric voltage induced by the magnet (3), implemented before the measurement step (103).

## FIG. 1

# FIG. 2

FIG. 3

```
┌─────────────────────────┐
│      Mise en rotation    │ ──── 101
└─────────────────────────┘
              │
              ▼
┌─────────────────────────┐
│       Amplification      │ ──── 102
└─────────────────────────┘
              │
              ▼
┌─────────────────────────┐
│         Mesure           │ ──── 103
└─────────────────────────┘
              │
              ▼
┌─────────────────────────┐
│   Élaboration de spectre │ ──── 104
└─────────────────────────┘
```

## FIG. 4

## FIG. 5

# FIG. 6a

# FIG. 6b

## FIG. 6c

## FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3208269 A
- US 4757717 A

- US 2575710 A